# FASCICULE DE BREVET EUROPEEN

(11) **EP 4 305 750 B1**
(45) Date de publication et mention de la délivrance du brevet: **18.06.2025**
(21) Numéro de dépôt: 22711580.5
(22) Date de dépôt: 01.03.2022
(51) Int. Cl.: H02S 20/22

(54) **PIÈCE DE FIXATION POUR FIXER UN PANNEAU SUR UN PROFILÉ, ET ENSEMBLE DE FIXATION COMPRENANT UNE TELLE PIÈCE ET UN PROFILÉ**
BEFESTIGUNGSTEIL ZUR BEFESTIGUNG EINER PLATTE AN EINEM PROFILABSCHNITT UND BEFESTIGUNGSANORDNUNG MIT EINEM SOLCHEN BEFESTIGUNGSTEIL UND EINEM PROFILABSCHNITT
FIXING PIECE FOR FIXING A PANEL TO A PROFILE SECTION, AND FIXING ASSEMBLY COMPRISING SUCH A FIXING PIECE AND A PROFILE SECTION

(30) Priorité: 11.03.2021 FR 2102380
(43) Date de publication de la demande: 17.01.2024
(73) Titulaire: Caillau, 41200 Romorantin-Lanthenay (FR)
(72) Inventeur: CLERC, Dylan, 41200 ROMORANTIN-LANTHENAY (FR); JACQUELIN, Arnaud, 41230 MUR DE SOLOGNE (FR)
(74) Mandataire: Cabinet Beau de Loménie
(86) Numéro de dépôt international: PCT/FR2022/050367
(87) Numéro de publication internationale: WO 2022/189729

(56) Documents cités:
- DE-U1- 202011 108 873

## Description

### Domaine technique

Le présent exposé concerne une pièce de fixation pour fixer un panneau sur un profilé.

Le panneau est en particulier un panneau photovoltaïque qui doit être fixé sur une structure de support, telle qu'un toit ou, généralement, une surface exposée au soleil.

### Technique antérieure

Pour fixer des panneaux, en particulier des panneaux solaires sur une structure de support, des profilés sont prédisposés sur la structure de support et les panneaux sont fixés à ces profilés de manière en général démontable.

Le document FR 3041 835 propose un mécanisme de fixation de panneaux solaires comprenant une pince fixée par des vis à un profilé monté sur la structure de support, le bord du panneau étant pris par la pince. Ce mécanisme est relativement complexe dans sa conception et dans son montage puisque, en particulier, il nécessite l'utilisation de vis de fixation. Le document DE 202011108873 U1 montre une pièce de fixation selon l'art antérieur.

Le document WO 2014 008 085 divulgue une pièce de fixation formant une boucle qui présente deux jambes desquelles s'étendent vers l'extérieur des ailes flexibles d'accrochage destinées à être insérées à l'intérieur d'un profilé, les jambes présentant au-dessus des ailes des butées d'arrêt pour coopérer avec le bord supérieur du profilé et une encoche d'insertion d'une partie d'un panneau. Cette pièce peut être montée sur le profilé sans utiliser de vis. Cependant, sa conformation est relativement complexe et le maintien du bord du panneau par rapport au profilé est relativement difficile à assurer. On note encore que cette pièce de fixation utilise une quantité relativement importante de matériau et que sa fabrication nécessite de nombreuses opérations de pliage, d'accrochage et de découpe, les pliages pouvant être réalisés dans des directions très différentes les unes des autres, ce qui complique encore la fabrication.

### Exposé de l'invention

L'invention vise à améliorer l'état de la technique précité en proposant une pièce de fixation sensiblement exempte des avantages exposés ci-dessus.

En particulier, l'invention vise à proposer une pièce de fixation qui puisse être fabriquée et utilisée de manière simple sans nécessiter d'outil complexe ou d'élément additionnel de fixation tel que des vis. L'invention vise à proposer une pièce de fixation qui permette de fixer de manière fiable un panneau sur un profilé sans nécessairement utiliser une quantité de matériau importante.

L'invention vise également à proposer un ensemble de fixation comprenant une telle pièce de fixation et un profilé, sur lequel la pièce de fixation puisse être fixée de manière simple et fiable.

L'invention vise encore à proposer un assemblage comprenant un tel ensemble et un panneau fixé sur le profilé via la pièce de fixation.

Ainsi, l'exposé concerne une pièce de fixation, selon la revendication 1 pour fixer un panneau sur un profilé, la pièce de fixation comprenant une platine plate ayant un bord avant et un bord arrière opposés selon une direction avant-arrière, le bord avant portant un rabat qui s'étend au-dessus de la platine de sorte qu'une fente d'insertion est délimitée entre le rabat et la platine, et le bord arrière portant un dosseret d'arrêt qui s'étend vers le haut, la pièce de fixation présentant en outre au moins un crochet droit et un crochet gauche qui s'étendent vers le bas à partir de la platine en étant espacés l'un de l'autre selon une direction droite-gauche, le crochet droit et le crochet gauche présentant chacun au moins un bord d'accrochage, les bords d'accrochage du crochet droit et du crochet gauche étant configurés pour s'accrocher sur deux surfaces distinctes.

Optionnellement, ledit au moins un bord d'accrochage du crochet droit s'étend vers la droite et ledit au moins un bord d'accrochage du crochet gauche s'étend vers la gauche, les bords d'accrochage des crochets droit et gauche définissant optionnellement ensemble un plan d'accrochage.

Optionnellement, la platine présente une partie de cadre, présentant optionnellement un contour fermé, les crochets étant raccordés à la platine à l'intérieur de la partie de cadre.

Optionnellement, la pièce de fixation comprend au moins deux lames qui s'étendent vers le bas à partir de la platine et qui présentent les crochets, les lames étant optionnellement découpées dans la platine et pliées vers le bas par rapport à ladite platine.

Optionnellement, la pièce de fixation comprend au moins une lame gauche portant ledit au moins un crochet gauche qui est formé par une portion saillante pliée, et au moins une lame droite portant ledit au moins un crochet droit qui est formé par une portion saillante pliée ; optionnellement, la portion saillante pliée formant le crochet gauche est pliée vers la gauche et la portion saillante pliée formant le crochet droit est pliée vers la droite.

Optionnellement, la pièce de fixation comprend au moins une lame gauche dans laquelle est formé ledit au moins un crochet gauche et deux lames droites dans lesquelles est formé ledit au moins un crochet droit, la lame gauche étant formée entre les deux lames droites, vues dans la direction droite-gauche.

Optionnellement, la pièce de fixation comprend au moins une lame droite dans laquelle est formé ledit au moins un crochet droit et deux lames gauches dans lesquelles est formé ledit au moins un crochet gauche, la lame droite étant formée entre les deux lames gauches, vues dans la direction droite-gauche. Optionnellement, le dosseret d'arrêt présente au moins un bord de retenue tourné vers le bas, le bord de retenue étant optionnellement formé sur une griffe de retenue.

Optionnellement, le rabat présente au moins une languette en saille à l'intérieur de la fente d'insertion.

Optionnellement, le rabat porte au moins une languette, en saillie vers le bas. Optionnellement, la pièce de fixation est formée en une seule pièce, optionnellement en métal.

Optionnellement, la pièce de fixation présente au moins une languette de calage droite-gauche, découpée dans la platine et apte à être pliée, de préférence vers le bas.

Optionnellement, les bords d'accrochage présentent des extrémités libres relevées vers le haut par rapport à des portions desdits bords d'accrochage éloignés desdites extrémités libres.

Optionnellement, les crochets sont rigides. En particulier, les crochets présentent optionnellement une rigidité telle que, sous l'effet d'une force de 20 daN, appliquée sur les bords d'accrochage dans la direction droite-gauche, lesdits bords d'accrochage sont déplacés d'une distance de 0 à 3 mm, optionnellement entre 1 et 2 mm.

L'exposé concerne également un ensemble de fixation comprenant une pièce de fixation selon l'exposé et un profilé, l'ensemble de fixation servant à fixer un panneau sur le profilé. Dans cet ensemble, le profilé présente une aile droite et une aile gauche, les crochets droit et gauche étant configurés pour être insérés entre l'aile droite et l'aile gauche et s'accrocher sur des bords internes de retenue que présentent lesdites ailes.

Optionnellement, les crochets présentent une résistance aux déformations dans la direction droite-gauche, qui est supérieure à la résistance des ailes aux déformations dans la direction droite-gauche, les ailes droite et gauche du profilé étant configurées pour s'écarter lors de l'insertion en force des crochets entre lesdites ailes.

L'exposé concerne encore un assemblage comprenant au moins un panneau et un ensemble de fixation selon l'exposé. Dans cet assemblage, le panneau présente une languette qui s'étend vers l'avant à partir du bord inférieur d'une face arrière du panneau, assemblage dans lequel la pièce de fixation est configurée pour être montée sur le panneau avec insertion de la languette du panneau dans la fente d'insertion et retenue de la face arrière du panneau par le dosseret d'arrêt.

Optionnellement, le dosseret d'arrêt porte un crochet supérieur, configuré pour s'accrocher sur un bord supérieur arrière du panneau.

Avec la pièce de fixation selon l'exposé, le panneau peut être parfaitement maintenu en ayant une languette insérée sous le rabat, dans la fente d'insertion. Dans ce cas, la face inférieure de cette languette repose sur la face supérieure de la platine de la pièce de fixation et est alors parfaitement supportée, tout en étant empêchée de se dégager vers le haut par le rabat qui vient contre la face supérieure de cette languette.

Le dosseret d'arrêt permet de retenir le bord du panneau vis-à-vis d'un déplacement vers l'arrière. Ainsi, ce panneau est parfaitement maintenu dans toutes les directions. La pièce de fixation peut cependant être aisément montée sur le panneau par insertion de la languette du panneau dans la fente d'insertion et calage du bord arrière du panneau contre le dosseret.

Dans la pièce de fixation, les crochets droit et gauche s'étendent vers le bas à partir de la platine dans laquelle ils peuvent être découpés, minimisant ainsi l'utilisation de matériau. La pièce de fixation présente une forme simple utilisant peu de matériau. Les crochets droit et gauche peuvent être fabriqués en une seule étape de découpe et de pliage. Les crochets droit et gauche sont accrochés sur les bords internes de retenue des ailes du profilé et sont donc parfaitement retenus. La pièce de fixation peut être globalement plus rigide que les ailes du profilé, ce qui signifie que, lors de l'insertion des crochets entre les ailes droite et gauche du profilé, ces ailes peuvent avoir tendance à s'écarter pour laisser les crochets passer et reprendre élastiquement leur position. Ainsi, la pièce de fixation peut présenter une résistance mécanique élevée propre à un parfait maintien du panneau par rapport à cette pièce.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 montre, en perspective, le bord d'un panneau fixé sur un profilé à l'aide d'une pièce de fixation selon un premier mode de réalisation.
[Fig. 2] La figure 2 montre en perspective la pièce de fixation selon le premier mode de réalisation.
[Fig. 3] La figure 3 est une vue de côté, selon la flèche III de la figure 2, de la pièce de fixation selon un premier mode de réalisation.
[Fig. 4] La figure 4 est une vue de face de la pièce de fixation, selon la flèche IV de la figure 2.
[Fig. 5] La figure 5 est une vue analogue à la figure 2, montrant une pièce de fixation selon un deuxième mode de réalisation.
[Fig. 6] La figure 6 est une vue de côté de la pièce de la figure 5, prise selon la flèche VI de la figure 5.
[Fig. 7] La figure 7 est une vue de face de la pièce de fixation du deuxième mode de réalisation, illustrant une variante.
[Fig. 8] La figure 8 est une vue analogue à la figure 2, montrant une pièce de fixation selon un troisième mode de réalisation.
[Fig. 9] La figure 9 est une vue de face, selon la flèche IX de la figure 8, montrant la pièce de fixation montée sur un profilé.
[Fig. 10] La figure 10 est une vue analogue à la figure 2, montrant une pièce de fixation selon un quatrième mode de réalisation.
[Fig. 11] La figure 11 montre, en vue de face prise selon la flèche XI de la figure 10, la pièce de fixation de la figure 10 montée sur un profilé.
[Fig. 12] La figure 12 est une vue de côté de la pièce de fixation de la figure 10, prise selon la flèche XII de la figure 10.
[Fig. 13] La figure 13 montre, en perspective, l'assemblage d'un panneau sur un profilé à l'aide d'une pièce de fixation selon un cinquième mode de réalisation.
[Fig. 14] La figure 14 montre, en perspective, la pièce de fixation selon le cinquième mode de réalisation.
[Fig. 15] La figure 15 montre, en perspective, une pièce de fixation selon un sixième mode de réalisation.

### Description détaillée

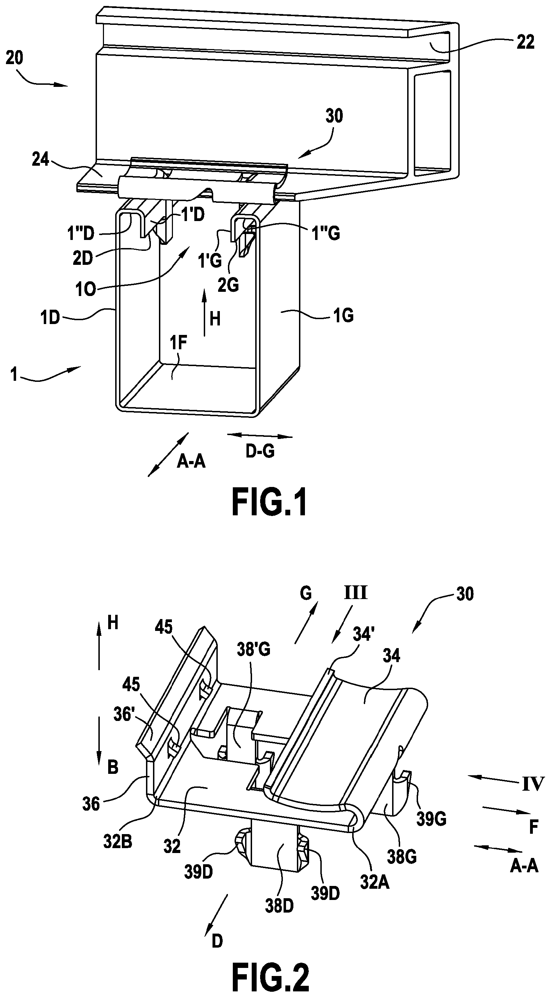

On décrit tout d'abord les figures 1 à 4, qui se rapportent au premier mode de réalisation.

Sur la figure 1, on a représenté un tronçon d'une longueur de profilé 1 dont la direction longitudinale définit la direction avant-arrière A-A. Ce profilé 1 présente une aile droite 1D et une aile gauche 1G. Ce profilé présente également un fond 1F opposé à une ouverture 1O, délimitée entre les ailes droite et gauche 1D et 1G. Par convention, la direction allant du fond 1F vers l'ouverture 1O définit une direction H vers le haut. Selon l'inclinaison du fond 1F du profilé, qui peut être par exemple disposé sur un toit en pente, cette direction H peut être verticale ou inclinée par rapport à la verticale.

Par convention, la direction s'étendant transversalement à la direction avant-arrière et allant de l'une à l'autre des ailes droite et gauche est la direction droite-gauche D-G. Les ailes droite et gauche 1D et 1G présentent chacune un bord interne de retenue respectivement 2D et 2G. En l'espèce, les extrémités supérieures des ailes 1D et 1G opposées au fond 1F sont repliées vers l'intérieur du profilé, les bords internes de retenue 2D et 2G étant formés par les bords libres de rebords internes 1'D respectivement 1'G s'étendant vers le bas et reliés aux extrémités supérieures des ailes 1D et 1G par des portions d'entretoisement respectivement 1"D et 1"G. Ainsi, les portions d'extrémité repliées des ailes 1D et 1G présentent en section transversale à l'axe A-A une forme en U inversé.

Bien entendu, d'autres conformations pour les bords internes de retenue des ailes du profilé pourraient être envisagées. Par exemple, les extrémités supérieures de ces ailes pourraient avoir une forme en L inversé, sans les retours 1'D et 1'G vers le bas. Par ailleurs, les portions d'entretoisement 1"D et 1"G pourraient être inexistantes ou pratiquement inexistantes.

On a représenté sur la figure 1 une partie 20 d'un panneau, qui peut être fixé sur le profilé 1 par une pièce de fixation 30. En l'espèce, la partie du panneau qui est représentée est une portion de cadre par exemple formée à partir de profilés assemblés pour délimiter un carré ou un rectangle. On voit que cette portion de cadre comprend une rainure 22 permettant de recevoir une tranche d'une autre partie du panneau, par exemple une partie qui présente des composants photovoltaïques.

La partie 20 comprend également en l'occurrence une languette 24 qui s'étend vers l'intérieur du panneau, c'est-à-dire, en l'espèce, vers l'avant. Cette languette peut présenter la forme d'une bande continue présente sur toute la longueur d'un élément de panneau tel qu'une portion rectiligne de son cadre. La languette peut cependant présenter des discontinuités.

La pièce de fixation 30 est mieux visible sur les figures 2 à 4. Elle comprend une platine plate 32 ayant un bord avant 32A et un bord arrière 32B qui sont opposés selon la direction avant-arrière A-A. Le bord avant présente un rabat 34 qui s'étend au-dessus de la platine 32 de sorte qu'une fente d'insertion 35 est délimitée entre le rabat et la platine. Plus précisément, cette fente est délimitée entre la face inférieure du rabat 34 et la face supérieure de la platine 32. Ainsi qu'on l'a indiqué, par convention, le bord avant 32A de la platine est celui qui porte le rabat 34, le bord arrière de la platine étant défini par opposition à ce bord avant.

Lorsque le panneau présente une partie telle que la partie 20 représentée sur la figure 1, le bord arrière est situé du côté du bord externe du panneau, tandis que le bord avant est situé davantage vers l'intérieur du panneau. On pourrait toutefois prévoir des panneaux ayant une configuration inversée.

Sur la figure 2, le sens vers l'avant est représenté par la flèche F, parallèle à la direction avant-arrière A-A. Le sens vers la droite D et le sens vers la gauche G sont donc définis respectivement à droite et à gauche de la pièce de fixation en regardant vers l'avant. On considère par convention que le rabat 34 s'étend au-dessus de la platine 32, de sorte que, à partir de la platine, la direction vers le haut H est celle qui va vers le rabat 34 tandis que la direction vers le bas B est celle qui s'en éloigne. La platine 32 présente généralement une forme plate et forme une plaquette dont la face supérieure définit un plan de repos pour la face inférieure d'un élément du panneau par lequel ce panneau est retenu par la pièce de fixation. En l'espèce, cet élément est la languette 24 précitée.

En général, le panneau sera monté au-dessus du profilé 1, de sorte que la pièce de fixation sera orientée afin que les positions vers le haut et vers le bas soient effectivement celles qui ont été définies par convention. Cependant, on peut concevoir que la pièce de fixation soit montée différemment. Ainsi, les directions vers l'avant et vers l'arrière, vers le haut et vers le bas et vers la droite et vers la gauche sont définies pour caractériser la géométrie de la pièce de fixation et, même si elles correspondent en général aux directions en situation d'utilisation de la pièce de fixation, ceci n'est pas obligatoirement le cas.

La pièce de fixation 30 comprend un dosseret d'arrêt 36 qui s'étend vers le haut à partir du bord arrière 32B de la platine 32. Par ailleurs, la pièce de fixation présente au moins un crochet droit 38D et un crochet gauche 38G qui s'étendent vers le bas à partir de la platine et sont espacés l'un de l'autre selon la direction droite-gauche. On voit en l'espèce que la pièce de fixation comprend deux crochets gauches 38G et 38'G et un crochet droit 38D. Ces crochets sont découpés dans la plaque formée par la platine 32 et rabattus vers le bas par rapport à cette plaque.

La platine présente donc une partie de cadre, à l'intérieur de laquelle sont formées des découpes dans lesquelles sont réalisés les crochets. Cette partie de cadre présente un contour fermé ou sensiblement fermés, les découpes n'empiétant pas ou peu dans ses bords droit ou gauche ou avant ou arrière.

Vu selon la direction droite-gauche D-G, le crochet droit 38D s'étend entre les deux crochets gauches 38G et 38'G. On optimise ainsi le positionnement des découpes servant à former ces crochets dans la plaque formée par la platine tout en formant les crochets ayant la longueur requise. Ainsi, on peut utiliser une platine dont la largeur, mesurée dans le sens droite-gauche, est relativement faible, tout en réalisant des crochets de longueur suffisante.

En l'espèce, le crochet droit présente des bords d'accrochage 39D qui s'étendent vers la droite et les crochets gauches présentent des bords d'accrochage 39G qui s'étendent vers la gauche. En d'autres termes, les bords d'accrochage des crochets s'étendent vers l'extérieur, de manière à pouvoir coopérer avec les bords internes de retenue des ailes du profilé lorsque les crochets sont insérés entre ces ailes. On pourrait imaginer une configuration inversée, avec un profilé présentant une âme et des bords externes de retenue et des crochets droit et gauche situés de part et d'autre de l'âme avec des bords tournés vers la gauche pour le crochet droit et vers la droite pour les crochets gauches (c'est-à-dire que les bords d'accrochage seraient tournés vers l'intérieur) de manière à coopérer avec des bords de retenue dépassant latéralement de l'âme du profilé.

Pour les différents crochets, des bords d'accrochage sont situés sensiblement au même niveau, de sorte qu'ils définissent globalement ensemble un même plan d'accrochage correspondant au positionnement des bords de retenue du profilé.

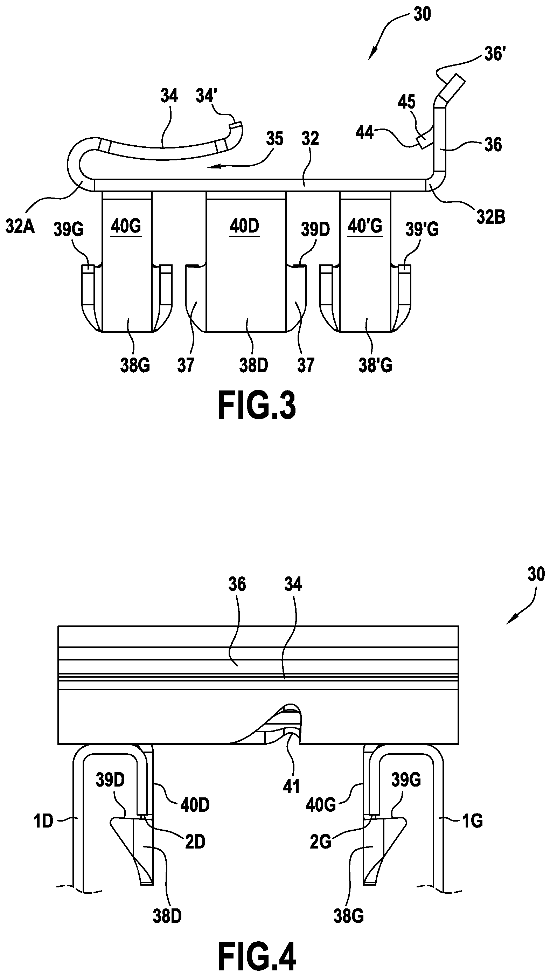

Cependant, comme on le voit sur les figures 3 et 4, les bords d'accrochage peuvent être légèrement relevés vers leurs extrémités libres, c'est-à-dire que leurs extrémités libres sont davantage vers le haut que d'autres portions des bords d'accrochage, en particulier que les portions des bords d'accrochages opposés à ces extrémités libres. Ceci permet de sécuriser la retenue des bords de retenue du profilé dans les crochets.

On voit en l'occurrence que les crochets sont portés par des lames, respectivement 40D pour le crochet droit et 40G et 40'G pour les crochets gauches. Ces lames s'étendent vers le bas à partir de la platine 32 et présentent les crochets à leurs extrémités opposées à la platine. Comme indiqué plus haut, les lames peuvent être découpées dans la platine et pliées vers le bas par rapport à cette dernière. Les bords d'accrochage peuvent être formés sur des portions saillantes 37 des lames, qui sont pliées, selon le cas, vers la droite ou vers la gauche. En effet, lames peuvent avoir, en vue à plat, une forme en champignon, les portions saillantes précités formant les parties de la tête du champignon qui dépassent latéralement de sa tige. Après la découpe des lames en champignon, ces lames sont repliées et, concomitamment cette opération de pliage, ou bien avant ou bien après cette opération, les portions saillantes sont repliées, vers la droite pour les parties d'ailes portées par la lame 40D et vers la gauche pour les parties d'ailes portées par les lames 40G et 40'G. Comme indiqué précédemment, les sens de repli des portions saillantes peuvent être inversés si les bords d'accrochage sont tournés vers l'intérieur, à l'inverse de ce qui est représenté.

Sur la figure 4, on voit la pièce de fixation 30 fixée sur les ailes 1D-1G d'un profilé dont seule la partie supérieure est représentée, les bords d'accrochage 39G et 39D étant engagés sous les bords de retenue 2D et 2G des ailes du profilé. On voit sur cette figure une découpe 41 dans laquelle a été découpée la patte 40D du crochet droit 38D. On voit également le dosseret d'arrêt 36, qui dépasse vers le haut par rapport à la face supérieure du rabat 34.

Sur les figures qui viennent décrites, on a représenté un crochet droit intercalé entre deux crochets gauches. Bien entendu, la disposition pourrait être inversée et l'on pourrait au contraire avoir deux crochets droits avec un seul crochet gauche intercalé entre les deux crochets droits, vus dans le sens droite-gauche. Par ailleurs, la platine est ici au total équipée de trois lames portant chacune des crochets. On pourrait bien entendu prévoir un nombre de lames différent. Cependant, cette configuration est avantageuse puisqu'elle permet une bonne reprise des efforts de pivotement autour d'une direction verticale. On constate que chaque crochet comporte deux bords d'accrochage, de sorte que les efforts d'accrochage sont bien répartis.

Comme on le voit sur les figures 2 et 3, le dosseret d'arrêt 36 présente un bord de retenue 44 qui est tourné vers le bas, ce bord de retenue est par exemple découpé à partir de la portion de plaque dans laquelle est formé le dosseret d'arrêt. Le bord de retenue est par exemple formé sur une griffe de retenue (en l'espèce, deux griffes de retenue) pouvant coopérer avec le bord extérieur du panneau pour le retenir dans une position plaquée contre la face supérieure de la platine, avec la languette insérée dans la fente 36. La ou les griffes de retenue sont en l'occurrence découpées dans le dosseret.

Par ailleurs, la pièce de fixation peut être réalisée en matériau électriquement conducteur, en particulier en métal, de même que le bord du panneau 20. Dans ces conditions, le bord de retenue 44 peut s'agripper sur la surface du bord externe du panneau, de sorte que la pièce de fixation et le bord externe du panneau sont en contact électrique ce qui favorise la mise à la masse de l'ensemble.

On voit sur la figure 3 que le rabat 34 présente une légère concavité tournée vers le haut ce qui signifie que, vu de l'intérieur de la fente d'insertion 35, il est légèrement convexe, la hauteur de la fente d'insertion variant donc dans la direction avant-arrière. Ceci favorise l'appui du rabat 34 sur la languette 24 du panneau insérée dans la fente 35.

Cependant, le bord libre 34' du rabat, peut être replié vers le haut de manière à former une sorte de rampe pour favoriser l'insertion de la languette du panneau dans la fente d'insertion 35. De même, le bord libre supérieur 36' du dosseret d'arrêt 36 peut être légèrement plié vers l'arrière pour favoriser l'insertion du bord extérieur (bord arrière) du panneau contre la face avant du dosseret 36. On comprend que la pièce de fixation peut être formée en une seule pièce à partir d'une plaquette métallique, par de simples découpes et pliages. De par la disposition des crochets, du rabat et du dosseret, cette pièce de fixation peut être formée dans un minimum de quantité de matière, c'est-à-dire que la plaquette dans laquelle elle est formée peut avoir des dimensions modérées tout en permettant une résistance mécanique de la fixation entre le panneau et le profilé qui soit optimisée.

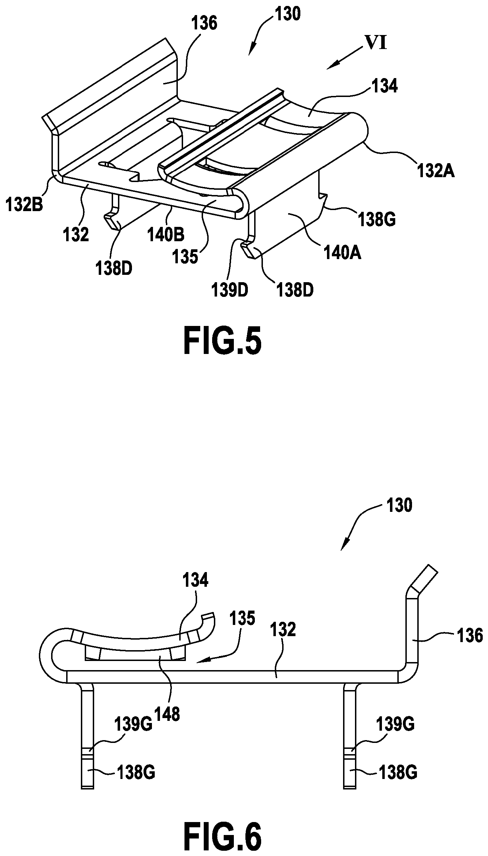

En référence aux figures 5 à 7, on décrit maintenant un deuxième mode de réalisation pour la pièce de fixation. Sur ces figures, les éléments correspondant à ceux des figures précédentes sont désignés par les mêmes références, augmentées de 100. La de fixation 130 des figures 5 à 7 est très similaire à la pièce de fixation 30 précédemment décrite et l'on reconnaît en particulier la platine 132, avec ses bords avant 132A et arrière 132B à partir desquels s'étendent respectivement le rabat 134 et le dosseret 136. Comme pour le mode de réalisation précédent, cette pièce de fixation peut être montée sur le bord d'un panneau, par insertion d'une languette du panneau dans la fente d'insertion 135 délimitée sous le rabat 134 et placement du bord extérieur du panneau contre le dosseret 136. Bien que les figures 5 à 7 représentent le dosseret 136 sans le bord d'accrochage 44 des figures précédentes, il doit être entendu qu'un tel bord d'accrochage peut être présent.

Ce qui différencie la pièce de fixation 130 de la pièce de fixation 30 est la conformation des crochets. En effet, cette pièce de fixation comprend deux lames, respectivement une lame avant 140A et une lame arrière 140B, qui sont découpées dans la platine et repliées par rapport à elles. Alors que les lames des figures précédentes étaient parallèles à la direction avant-arrière, celles-ci sont parallèles à la direction droite-gauche. Ainsi, les crochets droit et gauche sont formés sur les côtés, respectivement droit et gauche, de ces lames.

On voit ainsi deux crochets droits 138D et deux crochets gauches 138G qui sont formés sur des parties latéralement saillantes des extrémités inférieures des lames. Les bords d'accrochage 139D et 139G sont formés sur les surfaces supérieures de ces portions saillantes. Bien entendu, la largeur des lames correspond à l'espace entre les ailes du profilé sur lequel la pièce de fixation est destinée à être montée, les bords d'accrochage des crochets devant s'accrocher sous les bords de retenue de ces ailes.

On constate également sur les figures 5 à 7 que le rabat 134 présente des languettes 148 qui sont formées en saillie dans la fente d'insertion 135. En l'espèce, ces languettes sont découpées dans le rabat et pliées vers le bas par rapport à lui. En l'espèce, les languettes 148 et leurs lignes de pliage sont orientées parallèlement à la direction avant-arrière. Elles contribuent à plaquer la languette du panneau contre la face supérieure de la platine 132 et, par ailleurs, peuvent également établir avec cette languette un contact qui, si les matériaux de la pièce de fixation et de la languette sont électriquement conducteurs, par exemple du métal, peut établir un contact électrique favorisant la mise à la masse. En outre, du fait de leur orientation selon la direction avant-arrière, ces languettes tendent à s'opposer aux déplacements entre la pièce de fixation et le panneau, vers la droite ou vers la gauche

Bien entendu, les languettes 148 du deuxième mode de réalisation peuvent également être prévues sur la pièce de fixation selon le premier mode de réalisation. En l'espèce, deux languettes 148 espacées selon la direction droite-gauche sont prévues.

En considérant la figure et sa portion agrandie, on voit encore que les bords d'accrochage 139D et 139G des crochets présentent une configuration quelque peu particulière, en ayant une encoche 139' servant à loger l'épaisseur des bords de retenue du profilé. Ceci favorise le calage latéral du profilé par rapport à la pièce de fixation.

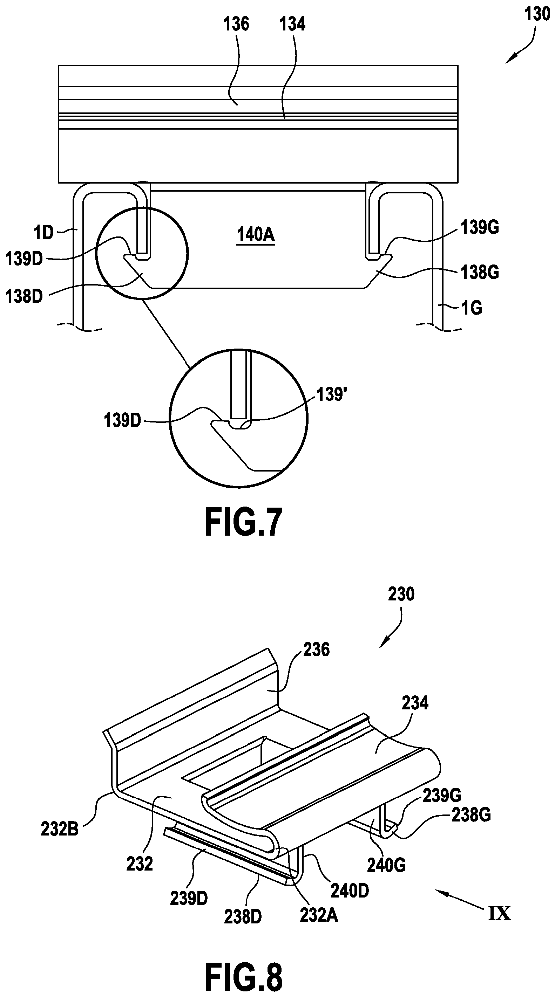

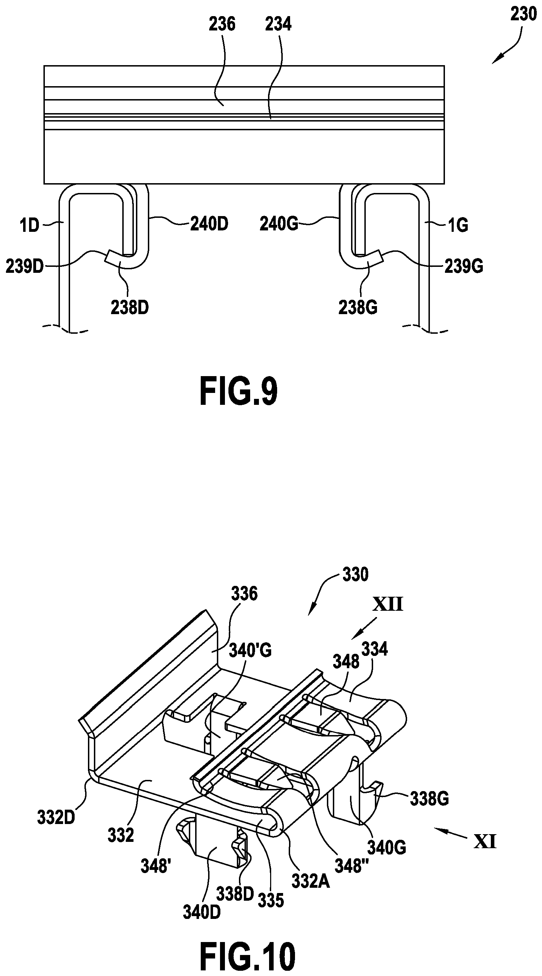

En référence aux figures 8 et 9, on décrit maintenant un troisième mode de réalisation. Sur ces figures, les mêmes références numériques que sur les figures 1 à 4 augmentées de 200 sont utilisées pour définir les éléments correspondants. On reconnaît donc que la pièce de fixation 230, avec sa platine 232, dont le bord avant 232A porte un rabat 234 et le bord arrière 232B porte un dosseret 236. Cette fois encore, les crochets sont formés dans des lames découpées et pliées par rapport à la platine. Plus précisément, dans ce mode de réalisation, la pièce de fixation comprend une lame gauche 240G et une lame droite 240D qui s'étendent parallèlement à la direction avant-arrière et dont les extrémités inférieures sont repliées, en l'occurrence vers l'extérieur, pour former les crochets, respectivement 238G et 238D. En l'occurrence, les lames 240D et 240G sont formées dans une même découpe de la platine, cette découpe ayant globalement une forme rectangulaire, et sont simplement repliées vers le bas par rapport à leurs lignes de pliage qui s'étendent selon la direction avant-arrière. Les bords d'accrochage 239D et 239G des crochets s'étendent en l'espèce sur l'intégralité de la longueur des lames. La partie de la platine 232 qui s'étend autour de la découpe rectangulaire forme un cadre de contour fermé.

Ce mode de réalisation convient particulièrement aux situations dans lesquelles il n'est pas nécessaire que les crochets soient nettement espacés de la platine, c'est-à-dire que les bords de retenue du profilé sont peu distants du plan de son ouverture 1O. Bien entendu, dans ce troisième mode de réalisation, on pourrait prévoir que le dosseret soit équipé du bord de retenue 44 du premier mode de réalisation et/ou que le rabat soit équipé d'au moins une languette 148 du deuxième mode de réalisation.

En référence aux figures 10 à 12, on décrit maintenant un quatrième mode de réalisation. Sur ces figures, les mêmes références numériques que sur les figures 1 à 4 augmentées de 300 sont utilisées pour définir les éléments correspondants. Ainsi, on reconnaît la pièce de fixation 330, avec sa platine 332 dont le bord avant 332A porte le rabat 334 sous lequel est ménagées la fente d'insertion 335, et le bord arrière 332B porte le dosseret 336. Globalement, les crochets sont conformés comme dans le premier mode de réalisation. Ainsi, les lames 340D et 340G et 340'G sont analogues aux lames 40D, 40G et 40'G, et les crochets 338D et 338G sont analogues aux crochets 38D et 38G.

Ce qui différencie le quatrième mode de réalisation du premier mode de réalisation est la présence de languettes 348 dans le rabat 334. En l'espèce, ces languettes 348 sont formées dans les découpes de ce rabat et sont repliées vers l'intérieur par rapport à des lignes de pliage 348' qui s'étendent parallèlement à la direction droite-gauche. Ces languettes sont donc globalement orientées selon la direction avant-arrière mais leurs lignes de pliage par rapport aux découpes dans lesquelles elles sont ménagées sont perpendiculaires aux lignes de pliage des languettes 148 du deuxième mode de réalisation. Bien entendu, bien qu'on ait représenté deux languettes 348, on pourrait en prévoir un nombre différent.

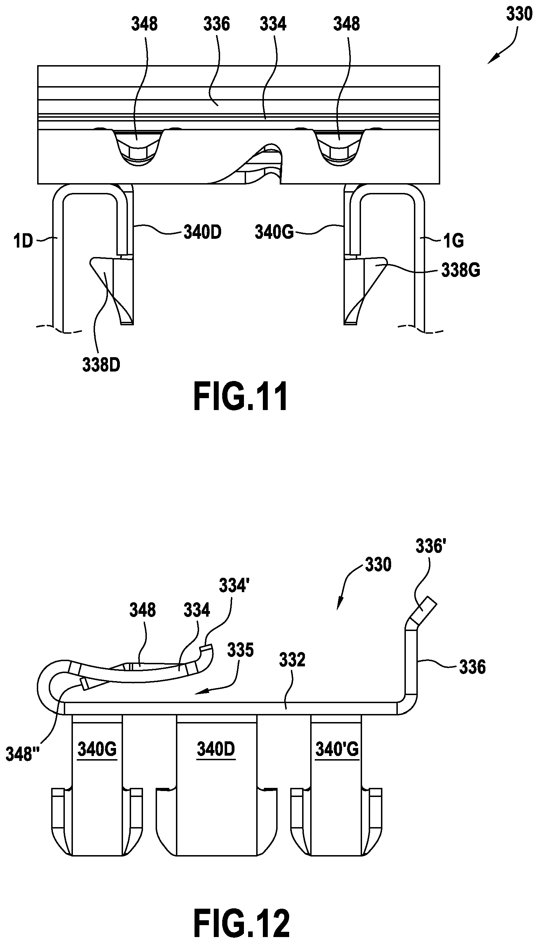

On voit que les extrémités libres 348" des languettes 348 sont conformées en pointe. Ces pointes peuvent présenter une relative agressivité pour s'agripper sur la face supérieure de la languette du panneau inséré dans la fente 335 ménagée sous le rabat 344 et favoriser la mise à la masse. En s'intéressant à la figure 12, on constate une particularité des languettes 348. En effet, leurs pointes 348" sont orientées vers le bas pour faire saillie à l'intérieur de la fente 335. Globalement, pour favoriser l'effort d'appui des languettes sur la languette du panneau inséré dans la fente 335, celles-ci présentent une concavité tournée vers le bas, contraire à la concavité tournée vers le haut du rabat 334.

Comme c'est le cas pour les modes de réalisation des figures 1 à 14, le bord libre 334' du rabat est replié vers le haut et le bord libre supérieur 336' du dosseret d'arrêt 336 est légèrement plié vers l'arrière pour favoriser l'insertion du bord extérieur du panneau contre la face avant du dosseret 336. Bien entendu, dans ce quatrième mode de réalisation, le bord de retenue 44 du premier mode pourrait être prévu.

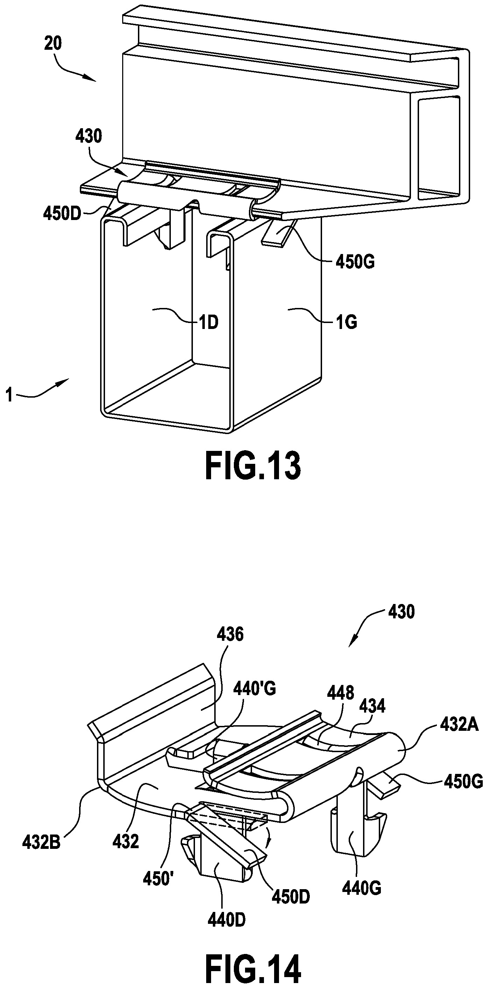

En référence aux figures 13 et 14, on décrit maintenant un cinquième mode de réalisation. Sur cette figure, les éléments de la pièce de fixation correspondant à ceux des figures 1 à 4 seront désignés par les mêmes références, augmentés de 400. Globalement, la pièce de fixation 430 du cinquième mode de réalisation est analogue à celle du premier mode de réalisation et l'on reconnaît la platine 432, dont le bord avant 432A porte le rabat 434 et le bord arrière 432B porte le dosseret 436. On reconnaît également les lames 440D, 440G et 440'G, respectivement analogues aux lames 440D, 440G et 440'G. De même, les crochets sont en l'occurrence identiques à ceux du premier mode de réalisation. Par ailleurs, on constate que le rabat 434 porte des languettes 448 analogues aux languettes 148 du deuxième mode de réalisation représenté sur les figures 5 à 7.

Ce qui différencie le cinquième mode de réalisation des modes de réalisation précédents est le fait que la platine 432 porte au moins une languette de calage droite-gauche en saillie vers le bas. En l'occurrence, la platine 432 porte une première languette de calage 450D et une deuxième languette de calage 450G qui sont toutes deux repliées vers le bas. En l'espèce, ces languettes de calage sont respectivement formées sur les bords droit et gauche de la platine 432. Elles sont globalement orientées dans le sens avant-arrière et pliées vers le bas par rapport à des lignes de pliage 450' qui sont parallèles à la direction droite-gauche.

Comme on le voit sur la figure 13, ces languettes de calage servent à caler entre elles les ailes 1D et 1G du profilé 1 sur lequel est montée la pièce de fixation. Par exemple, lors du montage de la pièce de fixation sur le profilé, les languettes de calage 450D et 450G sont initialement situées dans le plan de la platine 432. Elles peuvent être repliées à l'issue du montage pour caler les ailes du profilé ainsi qu'il a été indiqué.

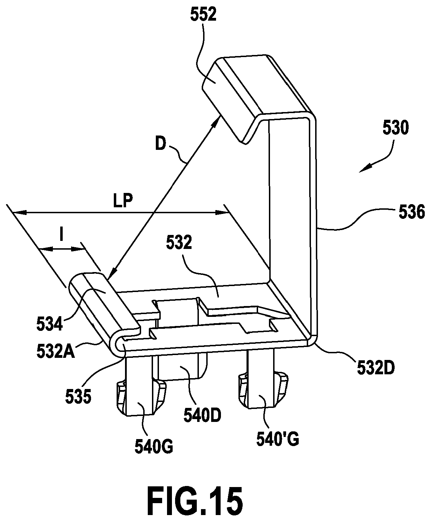

En référence à la figure 15, on décrit maintenant un sixième mode de réalisation sur lequel les mêmes références que sur les figures 1 à 4, augmentées de 500 sont utilisées pour désigner les éléments analogues de la pièce de fixation. On reconnaît la pièce de fixation 530, avec la platine 532 dont le bord avant 532A porte le rabat 534 sous lequel est ménagée la fente d'insertion 535, et dont le bord arrière 532B porte le dosseret d'arrêt 536. En l'occurrence, les crochets sont conformés comme dans le premier mode de réalisation, et l'on reconnaît les lames 540D, 540G et 540'G respectivement analogues aux lames 40D, 40G et 40'G.

A la différence des modes de réalisation précédents, le rabat 534 présente une longueur modérée dans le sens allant vers l'arrière. En effet, alors que la longueur mesurée dans ce sens du rabat des figures précédentes pouvait être située entre un quart et la moitié de la longueur totale de la platine, on voit ici que la longueur I du rabat 534 est plus faible, par exemple de l'ordre de 1/20^{ème} à 1/8^{ème} de la longueur totale LP de la platine 532 mesurée parallèlement à la direction avant-arrière, seule une petite longueur d'une languette du panneau analogue à la languette 24 représentée sur la figure 1 devant être insérée dans la fente 535 ménagée sous le rabat 534. A l'inverse, le dosseret 536 est plus haut que sur les figures précédentes et il porte un crochet supérieur 552 qui peut venir coiffer une partie arrière du bord supérieur du panneau de manière à sécuriser celui-ci par rapport à la pièce de fixation. Le bord de ce crochet 552 forme donc un bord de retenue tourné vers le bas.

Cependant, une distance importante D est délimitée entre le bord arrière du rabat 534 et le bord avant de l'extrémité supérieure du dosseret 536. Cette distance est suffisante pour permettre l'insertion en biais du bord du panneau dans la pièce de fixation. Par exemple, la distance D est de l'ordre de 1 à 2 fois la longueur LP de la platine 532.

## Revendications

1. Pièce de fixation, pour fixer un panneau sur un profilé (1), la pièce de fixation (30 ; 130 ; 230 ; 330 ; 430 ; 530) comprenant une platine plate (32 ; 132 ; 232 ; 332 ; 432 ; 532) ayant un bord avant (32A ; 132A ; 232A ; 332A ; 432A ; 532A) et un bord arrière (32B ; 132B ; 232B ; 332B ; 432B ; 532B) opposés selon une direction avant-arrière A-A, le bord avant portant un rabat (34 ; 134 ; 234 ; 334 ; 434 ; 534) qui s'étend au-dessus de la platine de sorte qu'une fente d'insertion (35 ; 135 ; 335 ; 535) est délimitée entre le rabat et la platine, et le bord arrière portant un dosseret d'arrêt (36 ; 136 ; 236 ; 336 ; 436 ; 536) qui s'étend vers le haut, **caractérisé en ce que** la pièce de fixation présente en outre au moins un crochet droit (38D ; 138D ; 238D ; 338D) et un crochet gauche (38G ; 138G ; 238G ; 338G) qui s'étendent vers le bas à partir de la platine en étant espacés l'un de l'autre selon une direction droite-gauche D-G, le crochet droit et le crochet gauche présentant chacun au moins un bord d'accrochage (39D, 139D, 239D ; 39G, 139G, 239G), les bords d'accrochage du crochet droit et du crochet gauche étant configurés pour s'accrocher sur deux surfaces distinctes.

2. Pièce de fixation selon la revendication 1, dans laquelle ledit au moins un bord d'accrochage (39D, 139D, 239D) du crochet droit (38D ; 138D ; 238D ; 338D) s'étend vers la droite et ledit au moins un bord d'accrochage (39G, 139G, 239G) du crochet gauche (38G ; 138G ; 238G ; 338G) s'étend vers la gauche, les bords d'accrochage des crochets droit et gauche définissant optionnellement ensemble un plan d'accrochage.

3. Pièce de fixation selon la revendication 1 ou 2, dans laquelle la platine (32 ; 132 ; 232 ; 332 ; 432 ; 532) présente une partie de cadre, présentant optionnellement un contour fermé, les crochets étant raccordés à la platine à l'intérieur de la partie de cadre.

4. Pièce de fixation selon l'une des revendications 1 à 3, comprenant au moins deux lames (40D, 40G, 40'G ; 140A, 140B ; 240D, 240G ; 340D, 340G, 340'G ; 440D, 440G, 440'G ; 540D, 540G, 540'G) qui s'étendent vers le bas à partir de la platine et qui présentent les crochets, les lames étant optionnellement découpées dans la platine et pliées vers le bas par rapport à ladite platine.

5. Pièce de fixation selon la revendication 4, comprenant au moins une lame gauche (40G, 40'G ; 240G ; 340G, 340'G ; 440G, 440'G ; 540G, 540'G) portant ledit au moins un crochet gauche (38G, 38'G) qui est formé par une portion saillante (37) pliée, et au moins une lame droite (40D ; 240D ; 340D ; 440D ; 540D) portant ledit au moins un crochet droit (38D) qui est formé par une portion saillante pliée (37), pièce dans laquelle, optionnellement, la portion saillante pliée formant le crochet gauche est pliée vers la gauche et la portion saillante pliée formant le crochet droit est pliée vers la droite.

6. Pièce de fixation selon la revendication 4 ou 5, pour laquelle au moins l'une des propositions (1) et (2) suivantes est vérifiée :
- (1) la pièce de fixation comprend au moins une lame gauche dans laquelle est formé ledit au moins un crochet gauche et deux lames droites dans lesquelles est formé ledit au moins un crochet droit, la lame gauche étant formée entre les deux lames droites, vues dans la direction droite-gauche ; ou
- (2) la pièce de fixation comprend au moins une lame droite dans laquelle est formé ledit au moins un crochet droit et deux lames gauches dans lesquelles est formé ledit au moins un crochet gauche, la lame droite étant formée entre les deux lames gauches, vues dans la direction droite-gauche.

7. Pièce de fixation selon l'une des revendications 1 à 6, dans laquelle le dosseret d'arrêt (36 ; 136 ; 236 ; 336 ; 436 ; 536) présente au moins un bord de retenue (44) tourné vers le bas, le bord de retenue étant optionnellement formé sur une griffe de retenue (45).

8. Pièce de fixation selon l'une des revendications 1 à 7, dans laquelle le rabat (134 ; 334 ; 434) présente au moins une languette (148 ; 348 ; 448) en saille à l'intérieur de la fente d'insertion (135 ; 335).

9. Pièce de fixation selon l'une des revendications 1 à 8, dans laquelle le rabat (134 ; 334 ; 434) porte au moins une languette (148 ; 348 ; 448), en saillie vers le bas.

10. Pièce de fixation selon l'une des revendications 1 à 9, formée en une seule pièce, optionnellement en métal.

11. Pièce de fixation selon l'une des revendications 1 à 10, présentant au moins une languette de calage droite-gauche (450D, 450G), découpée dans la platine (432) et apte à être pliée, de préférence vers le bas.

12. Pièce de fixation selon l'une des revendications 1 à 11, dans laquelle les bords d'accrochage (39D, 139D, 239D ; 39G, 139G, 239G) présentent des extrémités libres relevées vers le haut par rapport à des portions desdits bords d'accrochage éloignés desdites extrémités libres.

13. Pièce de fixation selon l'une des revendications 1 à 12, dans laquelle les crochets sont rigides, les crochets présentant optionnellement une rigidité telle que, sous l'effet d'une force de 20 daN, appliquée sur les bords d'accrochage dans la direction droite-gauche, lesdits bords d'accrochage sont déplacés d'une distance de 0 à 3 mm, optionnellement entre 1 et 2 mm.

14. Ensemble de fixation comprenant une pièce de fixation 30 ; 130 ; 230 ; 330 ; 430 ; 530) selon l'une des revendications 1 à 13 et un profilé (1), l'ensemble de fixation servant à fixer un panneau sur le profilé, ensemble dans lequel le profilé (1) présente une aile droite (1D) et une aile gauche (1G), les crochets droit et gauche étant configurés pour être insérés entre l'aile droite et l'aile gauche et s'accrocher sur des bords internes de retenue (2D, 2G) que présentent lesdites ailes.

15. Ensemble de fixation selon la revendication 14, dans lequel les crochets présentent une résistance aux déformations dans la direction droite-gauche, qui est supérieure à la résistance des ailes aux déformations dans la direction droite-gauche, les ailes droite et gauche du profilé étant configurées pour s'écarter lors de l'insertion en force des crochets entre lesdites ailes.

16. Assemblage comprenant au moins un panneau (20) et un ensemble de fixation selon la revendication 14 ou 15, dans lequel le panneau présente une languette (24) qui s'étend vers l'avant à partir du bord inférieur d'une face arrière du panneau, assemblage dans lequel la pièce de fixation est configurée pour être montée sur le panneau avec insertion de la languette du panneau dans la fente d'insertion et retenue de la face arrière du panneau par le dosseret d'arrêt.

17. Assemblage selon la revendication 16, dans lequel le dosseret d'arrêt (536) porte un crochet supérieur (552), configuré pour s'accrocher sur un bord supérieur arrière du panneau.

## Patentansprüche

1. Befestigungsteil zur Befestigung einer Platte an einem Profilabschnitt (1), wobei das Befestigungsteil (30; 130; 230; 330; 430; 530) eine flache Platine (32; 132; 232; 332; 432; 532) umfasst, die einen vorderen Rand (32A; 132A; 232A; 332A; 432A; 532A) und einen hinteren Rand (32B; 132B; 232B; 332B; 432B; 532B) aufweist, die in einer Richtung von vorne nach hinten A-A gegenüberliegen, wobei der vordere Rand eine Klappe (34; 134; 234; 334; 434; 534) trägt, die sich über der Platine erstreckt, so dass ein Einführungsschlitz (35; 135; 335; 535) zwischen der Klappe und der Platine eingegrenzt ist, und der hintere Rand ein Stopp-Rückteil (36; 136; 236; 336; 436; 536) trägt, das sich nach oben erstreckt, **dadurch gekennzeichnet, dass** das Befestigungsteil außerdem mindestens einen rechten Haken (38D; 138D; 238D; 338D) und einen linken Haken (38G; 138G; 238G; 338G) darstellt, die sich von der Platine aus nach unten erstrecken und in einer Richtung von rechts nach links D-G voneinander beabstandet sind, wobei der rechte Haken und der linke Haken mindestens einen Aufhängerand (39D, 139D, 239D; 39G, 139G, 239G) aufweisen, wobei die Aufhängeränder des rechten Hakens und des linken Hakens konfiguriert sind, um auf zwei verschieden Oberflächen eingehakt zu werden.

2. Befestigungsteil nach Anspruch 1, wobei der mindestens eine Aufhängerand (39D, 139D, 239D) des rechten Hakens (38D; 138D; 238D; 338D) sich nach rechts erstreckt und der mindestens eine Aufhängerand (39G, 139G, 239G) des linken Hakens (38G; 138G; 238G; 338G) sich nach links erstreckt, wobei die Aufhängeränder des linken und des rechten Hakens optional zusammen eine Aufhängebene definieren.

3. Befestigungsteil nach Anspruch 1 oder 2, wobei die Platine (32; 132; 232; 332; 432; 532) einen Rahmenteil aufweist, der optional einen geschlossenen Umfang aufweist, wobei die Haken im Inneren des Rahmenteils mit der Platine verbunden sind.

4. Befestigungsteil nach einem der Ansprüche 1 bis 3, umfassend mindestens zwei Klingen (40D, 40G, 40'G; 140A, 140E; 240D, 240G; 340D, 340G, 340'G; 440D, 440G, 440'G; 540D, 540G, 540'G), die sich von der Platine aus nach unten erstrecken, und die die Haken darstellen, wobei die Klingen optional in der Platine geschnitten und nach unten mit Bezug auf die Platine gefaltet sind.

5. Befestigungsteil nach Anspruch 4, umfassend mindestens eine linke Klinge (40G, 40'G; 240G; 340G, 340'G; 440G, 440'G; 540G, 540'G), die den mindestens einen linken Haken (38G, 38'G) trägt, der von einem gefalteten vorspringenden Abschnitt (37) gebildet ist, und mindestens eine rechte Klinge (40D; 240D; 340D; 440D; 540D), die den mindestens einen rechten Haken (38D) trägt, der von einem gefalteten vorspringenden Abschnitt (37) gebildet ist, ein Teil, in dem optional der gefaltete vorspringende Abschnitt, der den linken Haken bildet, nach links gefaltet ist und der gefaltete vorspringende Abschnitt, der den rechten Haken bildet, nach rechts gefaltet ist.

6. Befestigungsteil nach Anspruch 4 oder 5, wobei mindestens eine der folgenden Aussagen (1) und (2) überprüft wird:
- (1) das Befestigungsteil umfasst mindestens eine linke Klinge, in der der mindestens eine linke Haken gebildet ist, und zwei rechte Klingen, in denen der mindestens eine rechte Haken gebildet ist, wobei die linke Klinge zwischen den zwei rechten Klingen gebildet ist, gesehen in der Richtung von rechts nach links; oder
- (2) das Befestigungsteil umfasst mindestens eine rechte Klinge, in der der mindestens eine rechte Haken gebildet ist, und zwei linke Klingen, in denen der mindestens eine linke Haken gebildet ist, wobei die rechte Klinge zwischen den zwei linken Klingen gebildet ist, gesehen in der Richtung von rechts nach links.

7. Befestigungsteil nach einem der Ansprüche 1 bis 6, wobei das Stopp-Rückteil (36; 136; 236; 336; 436; 536) mindestens einen Rückhalterand (44) darstellt, der nach unten gedreht ist, wobei der Rückhalterand optional auf einem Rückhaltegriff (45) gebildet ist.

8. Befestigungsteil nach einem der Ansprüche 1 bis 7, wobei die Klappe (134; 334; 434) mindestens eine Lasche (148; 348; 448) darstellt, die im Inneren des Einführungsschlitzes (135; 335) vorspringt.

9. Befestigungsteil nach einem der Ansprüche 1 bis 8, wobei die Klappe (134; 334; 434) mindestens eine Lasche (148; 348; 448) trägt, die nach unten vorspringt.

10. Befestigungsteil nach einem der Ansprüche 1 bis 9, gebildet aus einem einzigen Stück, optional aus Metall.

11. Befestigungsteil nach einem der Ansprüche 1 bis 10, das mindestens eine Lasche mit einer Positionierung von rechts nach links (450D, 450G) aufweist, die in der Platine (432) geschnitten und ausgelegt ist, um gefaltet zu werden, vorzugsweise nach unten.

12. Befestigungsteil nach einem der Ansprüche 1 bis 11, wobei die Aufhängeränder (39D, 139D, 239D; 39G, 139G, 239G) freie Enden darstellen, die nach oben mit Bezug auf Abschnitte der Aufhängeränder, die von den freien Enden entfernt sind, erhöht sind.

13. Befestigungsteil nach einem der Ansprüche 1 bis 12, wobei die Haken starr sind, wobei die Haken optional eine derartige Starrheit aufweisen, dass unter der Einwirkung einer Kraft von 20 daN, die auf die Aufhängeränder in der Richtung von links nach rechts angewendet wird, die Aufhängeränder um eine Distanz von 0 bis 3 mm, optional zwischen 1 und 2 mm, verschoben werden.

14. Befestigungseinheit, umfassend ein Befestigungsteil (30; 130; 230; 330; 430; 530) nach einem der Ansprüche 1 bis 13, und einen Profilabschnitt (1), wobei die Befestigungseinheit dazu dient, eine Platte auf dem Profilabschnitt zu befestigen, Einheit, in der der Profilabschnitt (1) einen rechten Flügel (1D) und einen linken Flügel (1G) darstellt, wobei der rechte und der linke Haken konfiguriert sind, um zwischen dem rechten Flügel und dem linken Flügel eingeführt zu werden und auf den inneren Rückalterändern (2D, 2G) eingehakt zu werden, die diese Flügel darstellen.

15. Befestigungseinheit nach Anspruch 14, wobei die Haken einen Widerstand gegen Verformungen in der Richtung von links nach rechts darstellen, der höher als der Widerstand der Flügel gegen Verformungen in der Richtung von rechts nach links ist, wobei der rechte und der linke Flügel des Profilabschnitts konfiguriert sind, um sich bei der Einführung der Haken mit Gewalt zwischen die Flügel voneinander zu entfernen.

16. Zusammenbau, umfassend mindestens eine Platte (20) und eine Befestigungseinheit nach Anspruch 14 oder 15, wobei die Platte eine Lasche (24) darstellt, die sich von einem unteren Rand einer hinteren Seite der Platte nach vorne erstreckt, Zusammenbau, bei dem das Befestigungsteil konfiguriert ist, um auf der Platte mit Einführung der Lasche der Platte in den Einführungsschlitz und Rückhalt der hinteren Seite der Platte durch den Stopp-Rückteil montiert zu werden.

17. Zusammenbau nach Anspruch 16, wobei der Stopp-Rückteil (534) einen oberen Haken (552) trägt, der konfiguriert ist, um auf einem hinteren oberen Rand der Platte eingehakt zu werden.

## Claims

1. A fixing piece, for fixing a panel on a profile (1), the fixing piece (30; 130; 230; 330; 430; 530) comprising a flat plate (32; 132; 232; 332; 432; 532) having a front edge (32A; 132A; 232A; 332A; 432A; 532A) and a rear edge (32B; 132B; 232B; 332B; 432B; 532B) which are opposite in a front-rear direction A-A, the front edge bearing a flap (34; 134; 234; 334; 434; 534) which extends above the plate so that an insertion slot (35; 135; 335; 535) is defined between the flap and the plate, and the rear edge carrying a stop flange (36; 136; 236; 336; 436; 536) which extends upwards, **characterized in that** the fixing piece further has at least one right hook (38D; 138D; 238D; 338D) and a left hook (38G; 138G; 238G; 338G) which extend downwards from the plate while being spaced apart from one another in a right-left direction D-G, the right hook and the left hook each having at least one hooking edge (39D, 139D, 239D; 39G, 139G, 239G), the hooking edges of the right hook and the left hook being configured to hook on two distinct surfaces.

2. The fixing piece according to claim 1, wherein said at least one hooking edge (39D, 139D, 239D) of the right hook (38D; 138D; 238D; 338D) extends to the right and said at least one hooking edge (39G, 139G, 239G) of the left hook (38G; 138G; 238G; 338G) extends to the left, the hooking edges of the right and left hooks optionally together defining a hooking plane.

3. The fixing piece according to claim 1 or 2, wherein the plate (32; 132; 232; 332; 432; 532) has a frame part, optionally having a closed outline, the hooks being connected to the plate at the inside of the frame part.

4. The fixing piece according to one of claims 1 to 3, comprising at least two blades (40D, 40G, 40'G; 140A, 140B; 240D, 240G; 340D, 340G, 340'G; 440D, 440G, 440'G; 540D, 540G, 540'G) which extend downwards from the plate and which present the hooks, the blades optionally being cut into the plate and bent downwards with respect to said plate.

5. The fixing piece according to claim 4, comprising at least one left blade (40G, 40'G; 240G; 340G, 340'G; 440G, 440'G; 540G, 540'G) carrying said at least one left hook (38G, 38'G) which is formed by a bent projecting portion (37), and at least one right blade (40D; 240D; 340D; 440D; 540D) carrying said at least one right hook (38D) which is formed by a bent projecting portion (37), in which part, optionally, the bent projecting portion forming the left hook is bent to the left and the bent projecting portion forming the right hook is bent to the right.

6. The fixing piece according to claim 4 or 5, for which at least one of the following propositions (1) and (2) is verified:
- (1) the fixing part comprises at least one left blade in which said at least one left hook is formed and two right blades in which said at least one right hook is formed, the left blade being formed between the two right blades, seen in the right-left direction; or
- (2) the fixing part comprises at least one right blade in which said at least one right hook is formed and two left blades in which said at least one left hook is formed, the right blade being formed between the two left blades, seen in the right-left direction.

7. The fixing piece according to one of claims 1 to 6, wherein the stop flange (36; 136; 236; 336; 436; 536) has at least one retaining edge (44) facing downwards, the retaining edge optionally being formed on a retaining claw (45).

8. The fixing piece according to one of claims 1 to 7, wherein the flap (134; 334; 434) has at least one tab (148; 348; 448) projecting inside the insertion slot (135; 335).

9. The fixing piece according to one of claims 1 to 8, wherein the flap (134; 334; 434) carries at least one tab (148; 348; 448), projecting downwards.

10. The fixing piece according to one of claims 1 to 9, formed in a single piece, optionally made from metal.

11. The fixing piece according to one of claims 1 to 10, having at least one right-left wedging tab (450D, 450G), cut in the plate (432) and able to be bent, preferably downwards.

12. The fixing piece according to one of claims 1 to 11, wherein the hooking edges (39D, 139D, 239D; 39G, 139G, 239G) have free ends raised upwards relative to portions of said hooking edges remote from said free ends.

13. The fixing piece according to one of claims 1 to 12, wherein the hooks are rigid, the hooks optionally having a rigidity such that, under the effect of a force of 20 daN, applied to the hooking edges in the right-left direction, said hooking edges are moved by a distance of 0 to 3 mm, optionally between 1 and 2 mm.

14. A fixing assembly comprising a fixing piece (30; 130; 230; 330; 430; 530) according to one of claims 1 to 13 and a profile (1), the fixing assembly serving to fix a panel to the profile, in which assembly the profile (1) has a right wing (1D) and a left wing (1G), the right and left hooks being configured to be inserted between the right wing and the left wing and to hook onto internal retaining edges (2D, 2G) presented by said wings.

15. The fixing assembly according to claim 14, wherein the hooks have a resistance to deformations in the right-left direction which is greater than the resistance of the wings to deformations in the right-left direction, the right and left wings of the profile being configured to move apart during the forcible insertion of the hooks between said wings.

16. An assembly comprising at least one panel (20) and a fixing assembly according to claim 14 or 15, wherein the panel has a tab (24) which extends forwards from the lower edge of a rear face of the panel, in which assembly the fixing piece is configured to be mounted to the panel with the tab of the panel inserted into the insertion slot and retained from the rear face of the panel by the stop flange.

17. The assembly according to claim 16, wherein the stop flange (536) carries an upper hook (552), configured to hook onto a rear upper edge of the panel.
